Europäisches Patentamt

(19) European Patent Office

Office européen des brevets

(11) Publication number: **0 149 665**
**B1**

(12) # EUROPEAN PATENT SPECIFICATION

(45) Date of publication of patent specification: **27.04.88**

(51) Int. Cl.⁴: **B 62 D 25/18**

(21) Application number: **84902849.3**

(22) Date of filing: **28.06.84**

(86) International application number:
**PCT/US84/01004**

(87) International publication number:
**WO 85/00330 31.01.85 Gazette 85/03**

(54) **WATER SPRAY CONTROL FOR VEHICLE WHEELS.**

(30) Priority: **01.07.83 US 509875**

(43) Date of publication of application:
**31.07.85 Bulletin 85/31**

(45) Publication of the grant of the patent:
**27.04.88 Bulletin 88/17**

(84) Designated Contracting States:
**DE FR GB NL SE**

(56) References cited:
**GB-A-1 584 453**
**GB-A-2 014 525**
**US-A-3 341 222**
**US-A-3 834 732**
**US-A-3 866 943**
**US-A-3 899 192**
**US-A-4 205 861**
**US-A-4 258 929**

(73) Proprietor: **METCALF, George E.**
**15805 S.E. 12th Place**
**Bellevue, WA 98008 (US)**

(72) Inventor: **METCALF, George E.**
**15805 S.E. 12th Place**
**Bellevue, WA 98008 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

Water droplets of spray or "tread throw" are thrown from rotating tires of vehicles travelling on wet road surfaces and impact against surfaces of the vehicle, causing the spray droplets to fragment into smaller droplets of mist. This presents the problem of impaired visibility to the drivers of these and other vehicles during wet conditions. Water thrown from the tires generally comprises large and small water droplets, some in the form of a mist or even a fog. After being thrown from the tires, some droplets fall back into the path of other oncoming tires to thereby increase the visibility hazard. Tests have demonstrated erratic control by drivers enveloped in the spray thrown by the tires of large commercial trucks and tractor-trailer combinations as they travel on the wet roadways. Drivers of these large vehicles also have difficulty seeing through the spray generated by their own vehicles which occasionally causes accidents as these vehicles change lanes.

A device for controlling road spray according the preamble of Claim 1 is known from US—A—3,341,222 which discloses a Vehicle Wheel Spray Collector in which an apparatus has alternate upward and downward flaring channels with slots spaced apart and located at the top of the upward flaring channels. The curved apparatus in the shape of a fender collects water from the spray in the bottom of the downward flaring channels, which is thrown from the tires through the slots at the top of the upward flaring channels. A trough at the bottom of the collector collects spray and deposits it outside the tracks of the tires of the vehicle. The primary purpose of this invention is to collect the spray droplets rather than to coalesce or direct the spray and the spacing and size of the slots in the channels permits spray to fall back onto the rotating tire beneath the collector.

Brandon et al. in their U.S. Patent No. 4,258,929 disclose a Vehicle Spray Reduction Apparatus utilizing a curved mud flap having a grooved surface to collect the droplets of water and provide a channel for runoff outside the tracks of the tires.

Reddaway in his U.S. Patent No. 3,899,192 presents a Fender Flap Spray Collector which uses an artificial turf surface to collect the spray wherein the water flows down behind the surface matting of the fender flap and is channeled away from the tires.

Roberts et al. in their U.S. Patent No. 4,205,861 disclose an Automotive Vehicle Wheel Spray Collector, utilizing Roberts' earlier flaring channel design of his U.S. Patent No. 3,341,222 in which a backing is now used behind the channels and slots to deflect the spray droplets into the bottom of the downward flaring channels.

Effective control of road surface spray has still not been accomplished successfully by these earlier patents. Primarily intended to collect the spray, these devices provide little means to actually coalesce the spray droplets and prevent these droplsts from atomizing into a finer mist or fog which presents the greatest difficulty in visibility for drivers in wet conditions. The precise angular arrangement of wedges and slots to suppress the droplets and then coalesce the droplets into a flow of water prior to directing the flow away from the path of oncoming tires is still needed to provide safer conditions for drivers of the vehicles which generate the spray as well as other passing vehicles on the highway.

According to the invention, a vehicle spray control system is characterized by the features of Claim 1.

Description of drawings

Figure 1 is an environmental side view of a tractor-trailer vehicle with the various spray controllers of the vehicle spray control system mounted at various locations for suppressing, coalescing and directing the spray such as fender flap spray controllers behind each set of tandems, side skirt spray controllers, floor sill spray controllers, overwheel spray controllers, and general purpose spray controllers. Arrows indicate the direction of the trajectory of the spray water droplets and the relative angles at which they impact the receiving side of the spray controllers.

Figure 2 is a perspective view of the fender flap spray controller with cut away portions to show the framework and anti-twist and anti-sail members.

Figure 3 is a sectional view, 3—3 of Figure 2, of the fender flap spray controller showing the opposite side of the spray controller. Arrow heads show the path of various sized water droplets through the spray controller ranging in size from fine spray to a stream like flow of water.

Figure 4 shows a section on an overwheel spray controller with crosswise embedded steel bars for lateral strength, side steel bars for mounting and a central longitudinal steel bar to provide strength under icing conditions.

Figure 5A and Figure 5B are rear sectional views of the left and right split-flow overwheel spray controllers of Figure 4, section 5—5 of Figure 1.

Figure 6 is an end view of one of the two quick access fittings that clamp the overwheel spray controller of Figure 5 in place, section 6—6 of Figure 5.

Figures 7A and 7B schematically illustrate the orientation and function of two types of side skirt spray controllers on the left and right of the truck, respectively: vertical split-flow wedges in 7A and horizontal wedges in 7B, section 7—7 of Figure 1. A legend indicates the different size droplets ranging in size from fine spray to a stream-like flow of water.

Figure 8 is a side view showing several embodiments of spray controllers used in the location of tandem axles when the tractors are "bobtailing" by using T-shaped overwheel spray controller assemblies, between tractor-tandem spray controllers and the fender flap spray controllers.

Figure 9 is a sectional side view showing a tractor and trailer with similar embodiments of spray controllers as those in Figure 8 for easy comparison with Figure 8.

Figure 10 is a sectional perspective view of a floor sill spray controller (also shown in Figures 1 and 9) mounted on an I-beam type floor sill of the tractor or trailer.

Figure 11 shows a spring clamp, three of which hold the floor sill spray controller of Figure 10 in place.

Figure 12 is a view, section 12—12 of Figure 8, from the rear of the between tractor-tandem spray controller attached to the tractor frame.

Figure 13 is a cross sectional view, section 13—13 of Figure 12, of the between tractor-tandem spray controller.

Figure 14 is a top view, section 14—14 of Figure 12, of the between tractor-tandem spray controller attachment to the tractor frame.

Figure 15 shows a section of a general purpose spray controller as attached to the ends of the fuel tank of Figure 1.

Figure 16 is an illustration of a European Fender lined with an elongated or composite overwheel spray controller.

Figure 17 as section 17—17 of Figure 16 shows an overwheel spray controller bonded under the European Fender.

Figure 18 as section 18—18 of Figure 1 shows a general purpose spray controller mounted on the vertical cab surface above and forward of the steering axle.

Figure 19 shows alternate embodiments of the spray controllers mounted on a passenger vehicle, such as fender flap and overwheel spray controllers.

Figure 20 is section 20—20 of Figure 19 showing an overwheel spray controller cross section on a passenger vehicle.

Figure 21 illustrates a variety of wedge shapes that could be used with the spray controllers.

Figure 22 illustrates a diversity of slot shapes that could be used in the spray controllers.

Figure 23A is an enlarged side view of a tractor wheel and Figure 23B is a trailer wheel showing the pattern of spray, comparing the effectiveness of different embodiments of spray controllers alone and in combination with each other for both the tractor and trailer.

Figure 24 is a side view of a flexible fender flap mount with anti-sail capability that provides spring action to reduce fender flap spray controller loss when drivers back into docks.

Figures 25 through 27 show the construction of the overwheel T-shaped spray controller assemblies for use when tractors are bobtailing.

Figure 28 shows the method of molding teflon-surfaced wedges separated by open slot segments for a fender flap spray controller.

Figure 29 shows the stamp of a company name or logo imprinted into the spray controller.

Figure 30 is a sectional side view showing the retractable side skirt spray controller including the spiral spring held mounting arms and rotatable wings.

Figure 31 is an end view of Figure 30 with the side skirt partly lowered.

Figure 32 is a top view of the wind catcher which deflects an adverse crosswind to provide force to keep a retractable front left side skirt in place.

## Description of the preferred embodiments
### Introduction

A vehicle spray control system apparatus and method are provided for suppressing, coalescing and directing wet surface or roadway spray, also called "tread throw", which is thrown from rotating tires 11 of vehicles 4 via centrifugal forces generated by the rotating tires during travel of the vehicles 4 along the wet road surfaces. Wet road surfaces pose the hazard to drivers of impaired vision from the spray thrown by the tires of other vehicles particularly tandem tractor 3 trailer 5 combinations, as well as their own vehicles. Water droplets of the spray or "tread throw" generated by the rotating tires will often impact various surfaces on the vehicle, fragmenting into smaller droplets of mist, making it nearly impossible for a driver to see even with the windshield wipers on. High speed travel of larger tractor trailer combinations, having tandem axles and many sets of dual tires, can generate a large amount of spray and mist, especially between the tandem axles 28 and 29 of the tractor 3. The preferred embodiments of this invention are particularly adapted for use with tractor-trailer combinations whereby different embodiments of spray controllers 27 are positioned in selected locations on the tractor 3 and trailers 5 to control and direct the spray thrown by the tires, thereby suppressing the formation of mist by receiving and containing the spray droplets of water. Thereafter, the droplets become coalesced into larger droplets and ultimately become discharged as larger droplets and flowing water stream-like in appearance while being directed away from the rotational path of the tires of the vehicle. Other embodiments or applications of the vehicle spray control system apparatus however, may be adapted for use with airplanes travelling on a runway or boats travelling on the water, for example.

The vehicle spray control system apparatus centers on the use of spray controllers

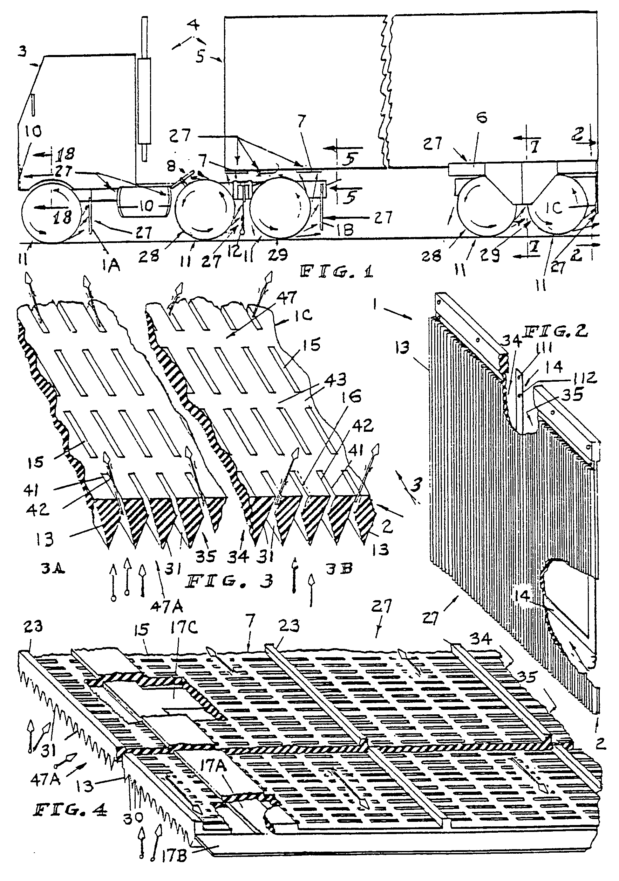

As shown in Figures 3 and 4 of the drawings, the spray controllers 27 of the vehicle spray control system apparatus, having a receiving side 47A and an opposite side 47, comprise an array of closely packed wedges 13 which are integrally formed with a base 2 having a planar surface. The wedges 13 each have opposite sloping faces 31 which converge at their outermost point at an apex wherein the wedges 13 are arranged on the base 2 to point symmetrically toward the oncoming spray as it is thrown from the tires 11 during travel of the vehicle 4 along the wet road surface. The bisectors of the sloping faces 31 of the wedges 13 are vertically positioned in parallel alignment with the plane of rotation of the wheels and tires of the vehicle. The side skirt spray controllers 6, however, have wedges 13 in which the bisectors of the sloping faces 31 are positioned perpendicularly to the plane of rotation of the tires. The wedge configurations will be discussed with each embodiment later.

In most embodiments of the spray controller 27, slots extend through the base 2, being longitudinally aligned and spaced apart between the wedges 13 to form apertures through which water and air may pass during travel of the vehicle. As shown in Figures 3 and 4 each slot has a forward surface 41 and rearward surface 42 with the rearward surface being a continuation of a sloping face of the adjacent wedge 13. As shown in Figure 3, the slots 15 extend through the base 2 slanted at an angle relative to the planar surface 30 of the base 2 to prevent the spray from passing directly through the slot 15, whereby it provides the impediment to the motion of the water droplets, thereby assisting in the coalescence of the water droplets of the spray and directing the larger water droplets and coalesced stream-like flow of water, away from the tracks of the rotating tires 11.

The primary embodiments of the spray controllers having a plurality of wedges 13 and slots 15 utilize a "split flow" design as shown in Figures 2 and 3 whereby the slots 15 on the left half 35 of the spray controller are angled to the left thereby directing large droplets and stream-like water from the left of the opposite side 47 of the spray controller and the slots 15 on the right half 34 of the spray controller 27 are angled to the right so as to direct the larger droplets and flow of stream-like water from the right of the opposite side 47 of the spray controller.

The spray controllers of the vehicle spray control system apparatus comprise several embodiments, adapted for use, for example, on tractor-trailer combinations

Figure 1 shows a vehicle 4, such as a tractor 3, trailer 5 combination equipped with the various preferred embodiments of the spray controllers of the vehicle spray control system apparatus, including: fender flap spray controllers 1, 1A located behind the steering axle of the tractor 3, 1B behind the tires of the tractor tandems 28 and 29, and 1C behind the tires of the trailer tandems; a side skirt spray controller 6; an overwheel spray controller 7; a T-shaped overwheel spray controller 8; a floor sill spray controller 9; general purpose spray controllers 10; and a between tractor tandem spray controller 12.

The application of two physical principles underlies an effective vehicle spray control system

The effectiveness of the vehicle spray control system is based on the application of two physical principles; first, a water droplet's collision energy with a surface and, therefore, the amount of spray generated by such collision is dependent upon the speed and direction of motion of the droplet relative to that surface, whereby the collision energy is decreasing continuously from a maximum when the direction of motion of the droplet is at normal incidence relative to the surface, to essentially zero when the direction of motion of the droplet is essentially parallel to that surface. Second, water droplets in mist and spray condense to form larger droplets of water more rapidly as their concentration increases by compression or by glancing incidence on a wet surface.

Method of suppressing, coalescing and directing larger (water) droplets and a stream-like flow of water through the spray controller: Application of two physical principles

The first physical principle is evidenced by the fact that the sloping faces 31 of the wedges 13 and the forward surface 41 and rearward surface 42 of the slots are positioned at an angle relative to the oncoming water droplets of the spray such that the droplets of water strike the wedge sloping faces and slot surfaces at grazing incidence, generally less than 20 degrees from surface parallel. Application of the second physical principle is shown in relation to the closely packed wedges with nominally 1/16 inch separation at the point of junction of the wedges 13 with the base 2. As the water droplets of spray approach the receiving surface 47A, they pass between the apexes of the wedges, striking the sloping faces near the base 2 and rearward surface of the slots 15, suppressing the formation of smaller droplets in a mist wherein the water droplets are compressed, thereby increasing their concentration and rate of coalescence. Glancing impact of the water droplets on the wedge sloping faces 31 and rearward surfaces 42 of the slots also enhances further coalescence of the water droplets from the spray to eventually form larger droplets and a flow of water which is stream-like in appearance.

The droplets' first impact is of energy proportional to $1/2 \, m \, (v \sin \emptyset)^2$ where m is the mass and $\emptyset$ is the angle between the velocity and the surface parallel. Collision energies at angles of 45, 30, 15 and 10 degrees are reduced to 0.5, 0.25, 0.067 and 0.030 respectively times the value at normal incidence. Thus water droplets break into fewer secondary droplets than they would at normal incidence. Those droplets of water that do not wet the wedges 13 and flow along their sloping faces will bounce off the wedge sloping faces at small angles. Glancing impacts of the spray droplets convert more energy to heat because of enhanced surface and internal friction rather than to increase surface energy by mist formation. Collisions of the secondary droplets of water occur generally at lower speed, many on the opposite wedge face. Upon impacting the sloping wedge faces in secondary collisions, the droplets of water will coalesce to form larger droplets and eventually most remaining droplets pass into the slots 15 or into the stream-like flow of water between the wedges 13. Water, droplets and residual spray also move through the slots 15 at high speed and are deflected, upon being discharged from the slots 15 on the opposite side 47 of the spray controller 27 to thereafter fall outside the tracks of the tires 11 of the vehicles 4.

The fender flap spray controllers of the vehicle spray control system apparatus

The fender flap spray controllers 1, (1A, 1B and 1C), shown in Figures 1, 2 and 3, are suspended vertically from the vehicle within the rotational path of the tires of both the tractor 3 and trailer 5. The wedges 13 are vertically positioned in parallel alignment with the plane of rotation of the tires.

Figures 3A and 3B illustrate the split flow design of fender flap spray controllers 1 wherein the slots 15 slant to the left side on the left half 35 of the spray controller 1 while slots 15 on the right half 34 of the spray controller 1 are slanted to the right side to permit the now coalesced flow of stream-like water to be discharged from the slots 15 on the opposite side 47 of the spray controller 1 away from the tracks of the tires and to fall substantially outside the path of the tires of the vehicle to the wet surface below. To facilitate manufacturing of the fender flap spray controller 1, divergent slots 16 may be used rather than parallel slots.

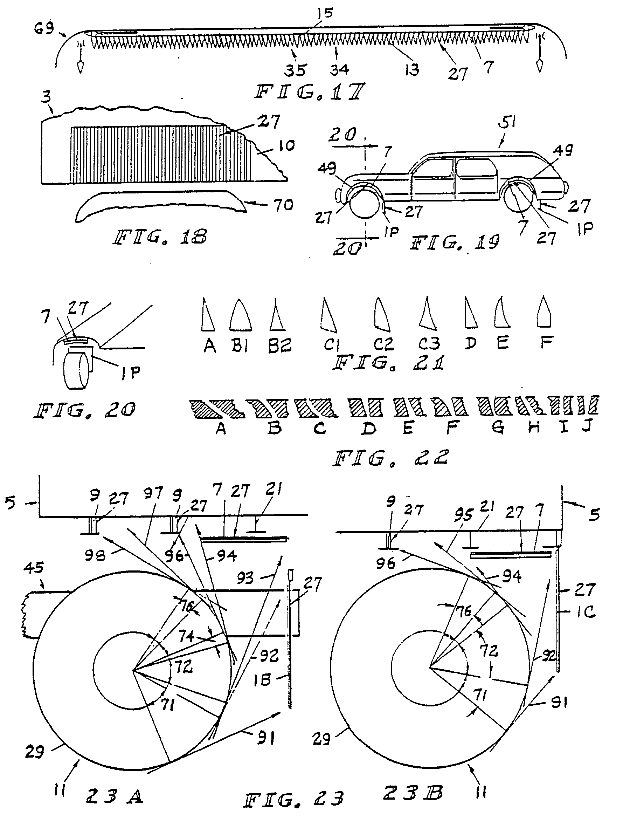

Increased length of the vertically aligned slots 15 as well as minimizing the planar separations 43 between the slots 15 increase the effectiveness with which the slots 15 will coalesce and direct the water droplets passing through the base 2. Fibrous material, such as Aramid, may be incorporated and positioned transversely within the base of the fender flap spray controllers 1 to add lateral strength and thereby permit increased area of the slots 15 and thus better spray suppression and coalescence. Figures 21 and 22 show a diversity of wedge shapes and angles and slot shapes and angles respectively. The preferred embodiment of the fender flap spray controllers 1, however, utilizes wedges 13 having symmetric sloping faces with roughly a 35 degree apex angle. The rearward 42 and forward 41 surfaces of the slots 15 are parallel to each other with the rearward surface of the slot being a continuation of the wedge sloping face half angle.

A pair of anti-sail and anti-twist members 14, preferably made of steel, are embedded in the fender flap spray controllers and positioned at right angles to each other to maintain proper alignment of the fender flap spray controllers 1 with the plane of rotation of the tires 11 and keep the spray controllers 1 from being pushed out of position by the force of the wind during travel of the vehicle 4. Such anti-sail and anti-twist members 14 are preferably used in all embodiments of the fender flap spray controllers 1.

The overwheel spray controller of the vehicle spray control apparatus

Figure 4 shows an overwheel spray controller 7 which is most effectively positioned directly above the upward moving portion of the rotating tires 11 of the vehicle 4 where the angle of impact of thrown droplets is nearly normal to the planar surface 30 of the base 2 of the overwheel spray controller 7. The region most directly above the top of the tire is avoided because of occasional tire impact against the bottom of the trailer.

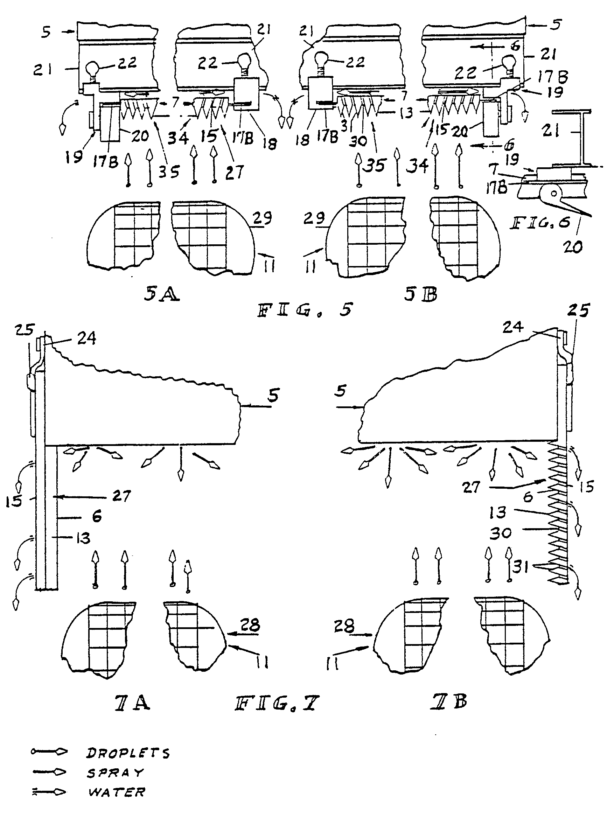

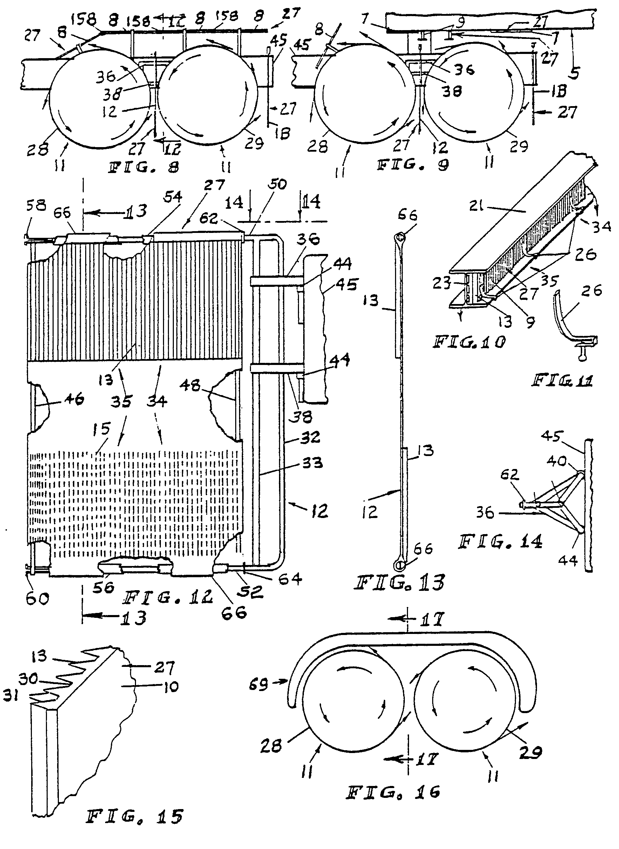

The preferred embodiment of the overwheel spray controller 7 utilizes the wedge 13 and slanted slot 15 arrangement of the fender flap spray controllers 1, whereby the bisectors of the sloping faces 31 of the wedges 13 are parallel to the plane of rotation of the tires 11. The overwheel spray controller 7 is mounted to the vehicle 4 with two crosswise bars 17A positioned at each end of the spray controller 7 which are embedded in the base 2 and are welded to or are integral with a pair of external longitudinal bars 17B on opposite sides of the overwheel spray controller as shown in Figure 4. The external longitudinal bars 17B slide into central fittings 18 which are located near the center of the trailer 5 and lock into quick-disconnect fittings 19 with eccentric clamps 20, attached to the floor sills 21 with wing screws 22 or bolts at the sides of the trailer 5, as shown in Figures 5 and 6. A central longitudinal bar 17C provides stability and strength for the overwheel spray controller 7, such as supporting ice collecting on the controller 7 in winter and assists the lateral runoff of the stream-like flow of water after being discharged from the slots at the opposite side of the base 2. Figures 5A and 5B illustrate the path of travel of water droplets into and over the overwheel spray controllers 7 on both the right and left sides of the vehicle respectively. Ribs 23, may be attached to the overwheel spray controller 7, shown in Figure 4, to guide the stream-like flow of water laterally, upon flowing from the slots, to thereafter fall outside the tracks of the tires 11 of the vehicle. The ribs 23 also provide separation from a flat surface above or a bonding surface for attachment to flat or curved surfaces of the vehicle. In Figures 19 and 20 the overwheel spray controller 7 is bonded to the fender 49 of a passenger car 51 having fender flap spray controllers 1 also installed.

A T-shaped overwheel spray controller assembly may be adapted for use with bobtailing tractors

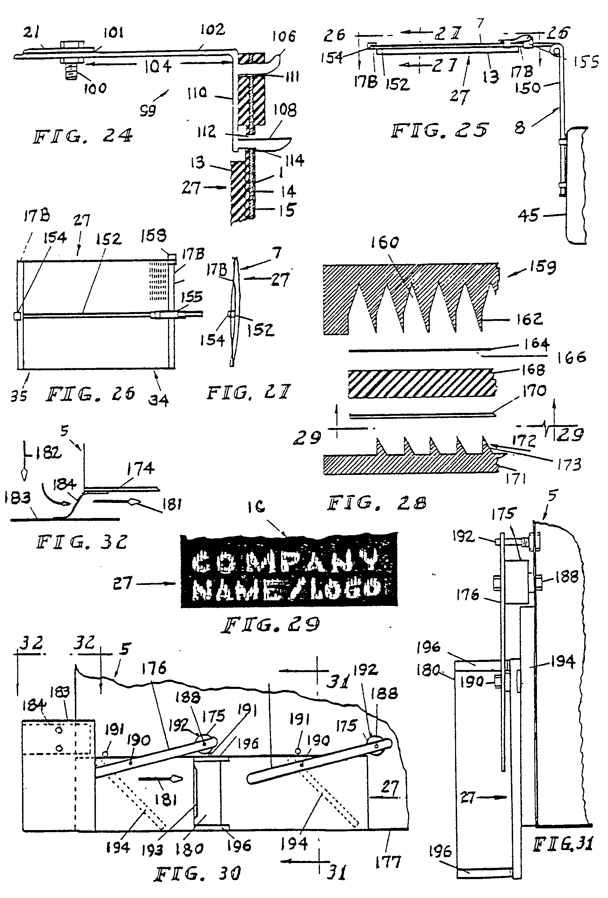

Figures 25 to 27 illustrate a T-shaped overwheel spray controller assembly 8, also shown in Figure 8, for tractors 3 when they are bobtailing or travelling without a trailer 5. A support 150 is used with a horizontal arm 152 which passes over the slot side of the overwheel spray controller 7, but under the external longitudinal bars 17B, firmly holding the outer external longitudinal bar 17B1 in slot 154 and the inner external longitudinal bar 17B2 in locking clamp 155 on the horizontal arm 152. The flexibility of the overwheel spray controller 7 is seen in Figure 27. Four T-shaped overwheel spray controller assemblies 8 are shown in position on the bobtailing tractor in Figure 8. Adjacent T-shaped overwheel spray controller assemblies 8 are held together by spring clips 158, shown in Figure 8, which slip over the ends of the external longitudinal bars 17B and provide rigidity to the support 150. The support 150 slips into a hollow fitting which is in turn secured to the vehicle 4. The T-shaped overwheel spray controller assemblies 8 can be removed and stored behind the cab of the vehicle when not in use. The front T-shaped overwheel spray controller assembly 8 has two separate fitting embodiments, including one to be used when the tractor 3 is bobtailing or not pulling a trailer, permitting the T-shaped controller assembly to meet an adjacent T-shaped controller assembly, as shown in Figure 8, and one to prevent throw of spray water droplets from hitting the driver's rear view mirror when the tractor is pulling a trailer 5, as shown in Figure 9.

The side skirt spray controller of the vehicle spray control system apparatus

As shown in Figures 7A and 7B, the side skirt spray controllers 6 are positioned outside the tracks of the tires, being suspended from the vehicle adjacent to the tops of the tires 11 with the base 2 being parallel to the plane of rotation of the tires 11. In this embodiment, the bisectors of the sloping faces 31 of the wedges 13 are positioned perpendicularly to the plane of rotation of the tires to control tire throw or spray which has been thrown by the rotating tires, impacting the underbody of the vehicle over the tires and thereby forming mist above the tire rather than being thrown in a direction parallel to its rotational path. The side skirt spray controllers 6 are secured to the tractor 3 and trailer 5 with quick disconnect fittings 19, which further comprise locking arms 24 and hooks 25. The locking arm 24 is pivotally secured to the trailer 5 underbody to be rotatably moved upward when the side skirt spray controllers 6 are being installed or removed as shown in Figure 7. The locking arms 24 also secure the side skirt spray controllers 6 in place, preventing further outward motion away from the tires 11. In the preferred embodiment, the side skirt spray controllers 6 have vertically positioned wedges 13 with slots 15 utilizing the "split flow" design as in other embodiments of the spray controllers 6. Alternative embodiments of the side skirt spray controllers 6 may use horizontally positioned wedges and slots as shown in Figure 7B.

Tests have shown that a large percentage of spray thrown by the rotating tires of the moving vehicles is generated by the impact of the water droplets above the wheels and tires. Side skirt spray controllers 6 may be even more effective in controlling road surface spray than the more conventionally placed fender flap spray controllers 1 and need be only approximately six to eight inches in height to provide an effective surface area to suppress and coalesce the spray deflected to the sides of the tires.

The side skirts of the vehicle spray control system are adapted to be retractable for trailer hookup maneuvering

The side skirt spray controllers 6 may be adaptably mounted to the vehicle so as to be retracted vertically above the tires when the vehicle is not being used, while the forces of air flow will rotatably push the side skirt spray controllers 6 downward into operational use during travel of the vehicle. This retractability permits tractor hookup maneuvering without damage to the side skirt spray controllers 6.

As shown in Figures 30 to 32 the side skirt spray controllers are retractably mounted via spring held mounting arms 176 which are pivotally secured at one end 188 to the trailer 5 underbody above the wheels and secured near their centers 190 to the top of the side skirt spray controller 6, permitting the mounting arms 176 to rotate. The mounting arms are restrained in the upward and substantially horizontal position by spiral springs 175 which force the mounting arms 166 and the attached side skirt spray controllers 6 forward and upward whereby the side skirt spray controllers 6 are retained in the retracted position when the vehicle is stopped.

Rotatable wings 180 are mounted in a vertical position on the outsides of the side skirt spray controllers 6, being held by rubber strips 196, extending forward, in close parallel alignment with the side skirt spray controllers 6 when the vehicle is stopped. During travel, as the vehicle begins to pick up speed, air flow begins to force the rotatable wings 180 rearward, rotating on their vertical axes into a position normal to the side skirt spray controllers 6. Upper members 192 and lower members 191 limit the motion of the side skirt spray controller 6. Motion of the rotatable wings is limited to the perpendicular position to the spray controllers 6. The forces of the air flow pushing on the rotatable wings 180, overcome the tension of the spiral springs 175, whereby the side skirt spray controllers 6 are forced downward and rearward, extending over the top portion of the tire for operational use. As the vehicle slows down and finally stops, the air flow is reduced whereby rubber strips 196, acting as hinges and springs, overcome the forces of the air flow to retract the rotatable wings 180 inward to the forward extending position as the side skirt spray controllers 6 are thus retracted.

The tension of the spiral springs 175 may be adjusted to permit the side skirt spray controllers 6 to be lowered or retracted at various speeds of the tractor 5 on the roadway. A lip 193 on the outer edge of the rotatable wings 180 extends outwardly to retain additional air flow and assist in rotating the wing.

During movement, the side skirt spray controllers bear against guide bars 194 that hold the spray controllers 6 away from irregular metal edges and bolts which extend from the sides of the trailer body.

In order to redirect adverse side winds 182 to assist in opening the rotatable wings 180, a wind catcher 183 deflects these side winds 182 back along the side skirt spray controllers in parallel alignment 181 with the rotatable wings 180. The wind catcher 183 is mounted by a support plate 184 just ahead of the front corner on each side of the trailer 5.

The portion of the mounting arms 176 which extend beyond the pivot point 190 of attachment to the side skirt spray controllers extends to near the bottom edge of the spray controller thereby providing lateral support when the side skirt spray controllers 6 are in the downwardmost position during travel of the vehicle.

The floor sill spray controller of the vehicle spray control system

Figure 10 shows floor sill spray controller 9, also using the "split-flow" design slot configuration, attached to an I-beam type floor sill 21 with a mounting clip 26. Upon being coalesced and directed through the slanted slots 15, the stream-like flow of water flows out from the slots on the opposite side of the base 2 and then is channelled behind the floor sill spray controller 9. Attachement of the floor sill spray controller 9 to a channel type floor sill would be similar. Three spring clips 26 hold the floor sill spray controller 9 in place. Rubber ribs 23 are shown molded between the slots and at the top and bottom of the floor sill spray controller 9 to assure adequate space behind the controller 9 for lateral run-off of a stream-like flow of water from the opposite side 47 of the base 2 along the floor sill 21 to fall outside the tracks of the tires of the vehicles onto the road surface.

The between tractor-tandem spray controller of the vehicle spray control system apparatus

The between tractor-tandem spray controller 12 suppresses and coalesces road surface spray thrown from the tires bewteen tractor-tandem dual axles 28 and 29, such spray being deflected and projected between the tires 11 and presents one of the most hazardous forms of spray to drivers. The tires 11 of the tractor-tandem duals partially clear a path through the road surface water for the trailer duals to follow. The water droplets of the spray thrown by the tires of the front tandem axle 28 strike the tread of the oncoming tires of the rear tandem axle 29 at speeds up to twice the vehicle velocity, often reaching 110 to 130 miles per hour, generating large amounts of spray.

Figures 8 and 9 show the tractor-tandem bobtailing and pulling a trailer 5 respectively. Tractor-tandem axles are spaced farther apart than trailer-tandem axles and thus permit between tractor-tandem spray controllers 12 to be mounted between the tandem axles. Figures 8, 9, 12, 13 and 14 show the between tractor-tandem spray controller 12 in position between the tandem axles having dual sets of tires.

The lower portion of the spray controller utilizes the wedge and "split flow" slot configuration whereby the array of wedges 13 face forward with respect to the front of the vehicle whereby the sloping faces 31 of the wedges 13 are vertically aligned in parallel alignment with the plane of rotation of the tires of the front tandem axle 28. This lower portion of the spray controller thus controls spray thrown rearwardly from the front tandem 28.

The upper portion of the between tractor-tandem spray controller 12 has an array of wedges 13 extending rearwardly from the base 2, being aligned with the plane of rotation of the tires to control spray thrown forward by the tires of the rear tandem 29 near the top of the rotational path as shwon in Figures 8 and 9. It is not necessary to use slots 15 in this upper portion of the spray controller 12 since little spray is generated at this particular location. Spray droplets are suppressed and coalesced upon striking the sloping faces 31 of the wedge 13 into a stream-like appearance of water flowing down the wedges 13 to thereafter fall onto the wet road surface.

The central portion of the between tractor-tandem spray controller 12 utilizes a base having no wedges 13 or slots 15. This will help decrease damage to the spray controller 12, such as from broken chains.

Tread throw droplets impacting above the forward wedge portion of the between tractor-tandem spray controller 12 are deflected upward and thereafter strike the lower surface of the trailer 5 above the tires 11. Use of the overwheel spray controllers 9 in combination with the between tractor-tandem spray controllers 12 will prove to be very effective in reducing the large amount of spray generated by the tires between the tandem axles.

The between tractor-tandem spray controllers 12 must be rigidly secured within the narrow space between the tires 11 of the tandem axles. Shown in Figure 12, support frame 37, comprising vertical members 32 and 33 and horizontal members 36 and 38, is secured to the tractor frame 45. Attachement members 40 and 44 are used to secure the support frame 37 to the tractor frame 45. Vertical rods 46 and 48 are embedded in the between tractor-tandem spray controllers 12 and are welded or rigidly attached to supporting cylinders 54 and 56. The supporting cylinders 54 and 56 are in turn secured in a horizontal position on support arms 50 and 52 by split spring stops 58 and 60 and by fixed stops 62 and 64. The supporting cylinders 54 and 56 are held rigidly in place by the vertical rods 46 and 48 and are enclosed by a rubber sheath 66.

General purpose spray controllers of the vehicle spray control system apparatus

Figure 15 shows a section of a general purpose spray controller bonded to the fuel tank and positioned forward of the steering axle tire shown as 10 in Figures 1 and 18. The general purpose spray controller is a similar embodiment to that of the fender flap spray controllers without slots. A thin base 2 on the general purpose spray controllers provides flexibility to bond to curved surfaces. Figure 18 shows a general purpose spray controller 10 bonded to the front wall of the cab ahead of and above the front tire 70 of the tractor 3 where the spray strikes at near normal incidence generating spray that flows into the adjacent lane.

A European Fender may be adapted for use with various embodiments of spray controllers

Figure 16 shows a European Fender 69 lined with an extended overwheel spray controller 7 attached to its curved underside to more effectively control spray. An assembly of T-shaped overwheel spray controllers 8 of Figure 8 could be substituted for the European Fender 69. A between tandem spray controller 12 would improve control of spray by the European Fender as well. The cross section of an overwheel spray controller 7 mounted to the underside of the European Fender 69 is shown in Figure 17. Flow of water droplets across the top of the spray controller is essential to reduce secondary spray formation by water falling back onto the moving tire which increases rather than decreases the spray problem.

Tire throw angle coverage by overwheel and floor sill spray controllers compared to that by fender flap spray controllers

Figures 23A tractor 3, and 23B trailer 5 illustrate the comparative angle coverage by various spray controllers. In Figure 23A spray thrown from tires in angular intervals 71, 72, 74 and 76 impinges on fender flap spray controller 1B, overwheel spray controller 7 and floor sill spray controller 9, respectively. The 30 inch fender flap spray controller 1B intercepts 39 degrees of throw between directions 91 and 92. The 26 inch width of the base 2 of the overwheel 7 and floor sill 9 spray controllers intercept 57 degrees of throw between directions 93 and 94, between 94 and 96, and between 97 and 98. Although it varies among vehicles, approximately 46 percent greater angle coverage of tire throw is obtained with only 87 percent as much area giving about 68 percent greater angle coverage per unit weight of material of the spray controller than by the fender flap spray controller 1. In Figure 23B the same fender flap spray controller 1, because of its typical location on a trailer, gives a coverage of only 29 1/2 degrees. The overwheel spray controller 7 and floor sill controller 9 combine to give 70 degree coverage with only 73 percent as much area for a 137 percent improvement compared to the fender flap spray controller 1 per unit weight of material.

A combination of several embodiments of spray controllers 27 used together provides a more effective means to suppress and control spray. These examples also demonstrate significant improvement in spray control by positioning the spray controllers properly, such as by placing the fender flap spray controller 1 low and close to the tires of the vehicle. If the latter fender flap spray controllers 1 were simply lowered to approximately five inches off the ground, their angular coverage would be more than doubled to 62 1/2 degrees.

Light weight flexible hangers protect the fender flap spray controllers of the vehicle spray control system apparatus

Figure 24 shows a light weight flexible hanger 99 to reduce fender flap spray controller 1 damage by drivers backing into loading docks for example. A spring steel angular member 102 is attached to the underbody of the trailer behind a wheel, to an I-beam, channel or to the frame of the trailer 5 by bolts 100 or welding 101. The extended section 104 provides resilience to allow flexing. Quick-connect, quick-disconnect capability is provided by the hook 106 and the snap-tight projection 108. Spring action for the snap-tight projection 108 is provided by intermediate section 110. To install the fender flap spray controller 1 the top holes 111 in the flap go over the two or three hooks 106 which pass through the two or three vertical steel anti-lift members 14 embedded in the fender flap spray controller 1, Figure 2. The fender flap spray controller is then bent down into the vertical position and the two or three snap-tight projections 108 protrude through two or three additional holes 112 in the steel anti-lift members 14 of the fender flap spray controller 1. The snap-tight projections 108 have lower lips 114 which snap into place as the bottom of the fender flap spray controller is pressed forward, holding it secure, locking it in place and providing the anti-sail function for the flap. On removal the snap-tight projections are pressed upward to disengage the fender flap.

Manufacture of spray controllers includes the use of two types of rubber including fiber and new rubber

The various embodiments of spray controllers 27 can be made by using new rubber Compound, in extruding simple wedge 13 arrays, without slots 15, or in a compression moulding process forming embodiments with slots. Fiber, scrap rubber from the manufacture of tires, may also be used as the primary material, mixed with appropriate portions of Compound, to minimize cost.

Compression molding of the spray controllers

Figures 28 and 29 illustrate the components used in the molding of spray controllers 21, with a base having a plurality of wedges 13 and slanted slots 15 using Fiber. A top compression mold 159 having hollow profiles 160, used to form wedges, and projections 162, to form the left portion of each slot 15, is shown. A sheet of thin Teflon of a type that can be bonded with an adhesive coat 166 to raw rubber and other materials is positioned above the uncured Fiber 168. The company name or logo 170 to be advertised on the opposite side 47 of a fender flap spray controller 1 is shown in position below the Fiber and above the bottom injection mold 171, which has wedge molds 172 to form the right portions of the slots 15. Heat and pressure are applied for the proper time during the molding process to cure the Fiber and compound. The company name or logo pierced by slots is illustrated in Figure 29.

The slots are formed as shown in Figure 28 with diverging sides to aid in molding and are obtained by using a 30 degree angle of the upper face 173 of the wedge mold 172 and a 20 degree wedge half-angle of the adjacent surface of the projections 162 to prevent direct transmission of spray through the slot.

Summary of advantages

The primary embodiments of this vehicle spray control system consist of spray controllers 27 comprising arrays of separated sloping faced wedges 13 projecting from the planar surface 30 of the base 2 with or without slanted slots 15 between the wedges 13 to suppress the formation of spray and deflect and direct water droplets which thereafter coalesce to form a flow of stream-like water passing through the base 2 to thereafter fall substantially outside the tracks of the tires 11. The spray controllers 27 of the system are positioned behind, over and beside tires on vehicles 4 to control mist and spray that originates from the impact of high velocity water droplets on hard flat surfaces. The components of this spray control system provide excellent spray control by applying two principles of physics: first, collision energy of a droplet with a plane surface and, therefore, the amount of spray that it generates upon impact is dependent upon its speed and upon its direction of motion relative to that surface, decreasing continuously from a maximum at normal incidence to essentially zero at a direction essentially parallel to that surface. Second, spray or mist condenses more rapidly to form larger droplets of water as their concentration increases by compression or by glancing incidence upon a wet surface. In addition, means to overcome molding difficulties are described. Side skirt spray controllers 6 may be protected from damage during hook-up of tractors 3 and trailers 5 by being adapted for retractability via wind-lowered, spring-raised mounting arms 176 secured to the side skirt spray controllers 6. Minimum usage of only the fender flap spray controllers 1 of this design will satisfy Oregon, United States of America, law which currently mandates spray controlling fender flaps for triple-tandem vehicles in rainy weather. However, spray conditions on occasions are severe enough that this minimum usage does not provide adequate safety because about two-thirds of the spray originates over the wheels and in other positions. On these occasions, which may be addressed by upcoming Federal standards, use of the additional embodiments will reduce time lost to weather and help to avoid costly accidents. Either overwheel spray controllers 7 or side skirts 6 combined with between tractor-tandem spray controllers 17 are most effective. The general purpose spray controllers ahead of the front wheels, on the ends of the fuel tanks and ahead of the chain compartment of the vehicle complete the proection, providing the greatest number of driving hours and the greatest safety under the widely varied weather conditions encountered on the highways of the world.

**Claims**

1. A vehicle spray control system apparatus to suppress spray and coalesce and direct water droplets from tread throw thrown from rotating tires of vehicles via centrifugal forces generated by the rotating tires during travel of the vehicles along wet surfaces or roadways, comprising:

a) a spray controller (27) which further comprises a plurality of wedges (13) integrally formed with and projecting from a base (2) wherein the wedges (13) are spaced apart in vertical alignment on the base (2); and

b) means (17) to secure the spray controller to a vehicle; whereby the base (2) of the spray controller (27) further comprises a plurality of elongated slots (15) which extend through the base being spaced apart end to end between the wedges (13) to permit the passage of air and water droplets from the spray subsequent to the spray making initial contact with the wedges and the base upon impact of the spray with the receiving side of the spray controller characterized in that the slots (15), each having a forward surface (41) and rearward surface (42), extend through the base angularly to form a slanted aperture which thereby diverts the initially straight linear travel of water droplets from the spray through the base upon entering the opening of the slot (15) on the receiving side of the spray controller and thereafter falling from the slots on the opposite side of the spray controller.

2. A vehicle spray control system apparatus as defined in Claim 1 wherein the forward surfaces (41) and rearward surfaces (42) of each slot are parallel, the rear surface of the slot being flush with and a continuation of one sloping face of the wedge (13) positioned adjacent to the slot, forming a continuous slanted surface such that mist formation from the oncoming water droplets of spray, thrown from the rotating tires of the vehicle, is suppressed, the water droplets being coalesced into larger droplets of water upon first striking the sloping faces of the wedges and the rearward surface of the slot prior to the spray droplets passing through the base.

3. A vehicle spray control system apparatus as defined in Claim 2 wherein the slots (15) of the spray controllers diverge through the base (2) such that one half of the slots are slanted to the left while the other half of the slots are slantsd toward the right to thereby guide the flow of the now suppressed and coalesced spray to the left side and right side respectively of the spray controller (27) and thus redirecting the flow of water droplets through the base to thereafter be discharged from the opposite side of the spray controller away from the center of the spray controller and away from the path of the rotating wheels and tires of the vehicle.

4. A vehicle spray control system apparatus as defined in Claim 2 wherein the slots are all slanted toward the left or toward the right, extending through the base from the planar surface at an angle so as to discharge the water droplets from the opposite side of the spray controller toward the left side or toward the right side respectively.

5. A vehicle spray control system apparatus as defined in Claim 3 wherein the spray controllers are positioned outside of the wheels and tires of the vehicle such that the sloping faces of the wedges (13) extend from the base (2) being symmetrically arranged and oriented transversely to the plane of rotation of the wheel.

6. A vehicle spray control system apparatus as defined in Claim 5 wherein the side skirts spray controllers (6) are pivotally secured at their opposite sides of the base to elongated mounting arms (176) which are in turn pivotally secured to the trailer above the wheels and which restrain the vertically positioned side skirts, via springs, secured to the inboard end of the mounting arms (176) in a raised position above the wheels when the vehicle is stopped while the side skirts are forced downwardly and rearwardly into operating position adjacent to the top portion of the tire of the vehicle by the forces of air flow during travel of the vehicle.

7. A vehicle spray control system apparatus as defined in Claim 6 wherein one or more rotatable wings (180) are secured to the side skirts and held by springs in a position parallel to the side skirts (6) whereby during forward travel of the vehicle, the wings (180) are rotatably forced outwardly and rearwardly to a position perpendicular to the side skirts to force the side skirts downwardly and rearwardly into the operating position.

8. A vehicle spray control system apparatus as defined in Claim 1 wherein a plurality of vertical bars (46, 48) are embedded in the spray controller along each of the outside edges and positioned perpendicular to a cross bar imbedded within the spray controller so as to prevent sail and twist of the spray controllers respectively during travel of the vehicle.

9. A vehicle spray control system apparatus as defined in Claim 5 wherein the wedge faces are asymmetrical.

10. A vehicle spray control system apparatus as defined in Claim 1 wherein the forward and rearward surfaces of the slots are in nonparallel alignment with each other.

11. A vehicle spray control system apparatus as defined in Claim 2 wherein the lower portion of the base comprises wedges which extend to the front of the vehicle with slots located between the wedges extending through the base and upper portion of the base comprises wedges which extend toward the back of the vehicle with slots located between the wedges, such slots extending through the base, while the center portion of the base contains no slots or wedges, the spray controller being positioned between the tandem axles of the trailer to control spray from both the front and rear tires of the tandem axles.

**Patentansprüche**

1. Vorrichtung zur Sprühwassersteuerung an Fahrzeugen zum Unterdrücken der Bildung von Sprühwasser und zum Koaleszieren und Leiten von von der Fahrbahn aufgenommenen Wassertröpfchen, die von rotierenden Rädern des Fahrzeugs unter Zentrifugalkräften abgeschleudert werden, die von den sich drehenden Rädern während des Fahrens des Fahrzeuges über nasse Fläche oder Straßen erzeugt werden, mit:

a) einem Sprühwasserregulator (27), der eine Mehrzahl von Keilen (13) enthält, die einstückig mit einem Trägerteil (2) ausgebildet sind und von diesem abstehen, wobei die Keile (13) auf dem Trägerteil im Abstand voneinander vertikal ausgerichtet sind; und

b) einer Einrichtung (17) zum Befestigen des Sprühwasserregulators an einem Fahrzeug; wobei außerdem der Trägerteil (2) des Sprühwasserregulators (27) eine Mehrzahl länglicher Schlitze (15) aufweist, die sich durch den Trägerteil mit ihren Enden im Abstand voneinander zwischen den Keilen (13) erstrecken, um den Durchgang von Luft und Wassertröpfen aus dem Sprühwasser zu ermöglichen, nachdem das Sprühwasser durch dessen Auftreten auf die Aufnahmeseite des Sprühwasserregulators anfänglich in Kontakt mit den Keilen und dem Trägerteil gelangt,

dadurch gekennzeichnet, daß sich die Schlitze (15), die jeweils eine vordere Fläche (41) und eine hintere Fläche (42) aufweist, in einem Winkel durch den Trägerteil erstrecken, so daß sie jeweils einen Schrägspalt bilden, der dadurch die Wassertröpfchen aus dem Sprühwasser an ihrem anfänglich beim Eintreten in die Öffnung des Schlitzes (15) an der Aufnahmeseite des Sprühwasserregulators geraden Weg ablenkt, wonach die Wassertröpfen au der anderen Seite des Sprühwasserregulators aus dem Schlitz fallen.

2. Vorrichtung zur Sprühwassersteuerung an Fahrzeugen, nach Anspruch 1, bei der die vordere Fläche (41) und die hintere Fläche (42) jedes Schlitzes parallel sind und die hintere Fläche des Schlitzes, die mit der geneigten Fläche des Keils (13), die dem Schlitz benachbart ist, fluchtet und eine Verlängerung derselben ist, eine durchgehende Schrägfläche bildet, derart daß die Bildung von Sprühnebel aus den ankommenden Sprühwassertröpfchen, die von den sich drehenden Rädern des Fahrzeuges abgeschleudert werden, unterdrückt wird und die Wassertröpfchen durch den Kontakt mit den geneigten Flächen der Keile und der hinteren Fläche der Schlitze zu größeren Wassertröpfchen koalesziert werden, bevor die Sprühwassertröpfchen den Trägerteil passieren.

3. Vorrichtung zur Sprührwassersteuerung an Fahrzeugen, nach Anspruch 2, bei der die Schlitze (15) des Sprührwasserregulators durch den Trägerteil (2) derart divergierend verlaufen, daß die eine halbe Anzahl der Schlitze zur linken Seite geneigt ist, wohingegen die andere halbe Anzahl der Schlitze zur rechten Seite geneigt ist, wodurch der Strom des nun unterdrückten und koaleszierten Sprühwassers zur linken bzw. rechten Seite des Sprühwasserregulators (27) geleitet wird und dadurch der Strom der Wassertröpfchen durch den Trägerteil derart umgeleitet wird, daß die Wassertröpfchen danach von der entgegengesetzten Seite des Sprühwasserregulators aus der Mitte des Sprühwasserregulators und aus der Bahn der sich drehenden Räder und Reifen des Fahrzeuges abgelenkt ausgegeben werden.

4. Vorrichtung zur Sprühwassersteuerung an Fahrzeugen nach Anspruch 2, bei der die Schlitze alle jeweils zur rechten oder linken Seite geneigt sind und von der ebenen Fläche durch den Trägerteil in solch einem Winkel verlaufen, daß die Wassertröpfchen von der entgegengesetzten Seite des Sprühwasserregulators zur rechten oder linken Seite hin abgelenkt ausgegeben werden.

5. Vorrichtung zur Sprühwassersteuerung an Fahrzeugen, nach Anspruch 3, bei der die Sprühwasserregulatoren außerhalb der Räder und Reifen des Fahrzeuges derart positioniert sind, daß die geneigten Flächen der Keil (13) sich von dem Trägerteil (2) aus symmetrisch angeordnet und quer zur Rotationsebene des Rades ausgerichtet erstrecken.

6. Vorrichtung zur Sprühwassersteuerung an Fahrzeugen, nach Anspruch 5, bei der die Seitenschürzen-Sprühwasserregulatoren (6) an ihren entgegensetzten Seiten des Trägerteils an länglichen Tragermen (176) schwenkbar befestigt, sind, die ihrerseits am Fahrzeug oberhalb der Räder schwenkbar befestigt sind und die vertikal angebrechten Seitenschürzen, die an dem dem Fahrzeug zugewandten Ende der Tragarme (176) befestigt sind, über Federn in abgehobener Stellung oberhalb der Räder festhalten, wenn das Fahrzeugt hält, während die Seitenschürzen während der Fahrt das Fahrzeuges von dem Fahrtwind nach unten und hinten in ihre Arbeitsstellung gedrückt werden, in der sie sich zu dem oberen Teil des Reifens des Fahrzeugs benachbart befinden.

7. Vorrichtung zur Sprühwassersteuerung an Fahrzeugen, nach Anspruch 6, bei der ein oder mehrere schwenkbare Flügel (180) an den Seitenschürzen befestigt sind und mit Hilfe von Federn in einer zu den Seitenschürzen (6) parallelen Lage gehalthen werden, wobei während der Vorwärtsfahrt des Fahrzeuges die Flügel (180) nach außen- und hintenschwenkend in eine zu den Seitenleisten rechtwinklige Lage gedrückt werden, um die Seitenschürzen nach unten und hinten in ihre Arbeitsstellung zu drükken.

8. Vorrichtung zur Sprühwassersteuerung an Fahrzeugen, nach Anspruch 1, bei der eine Mehrzahl vertikaler Stangen (46, 48) entlang jeder der Außenkanten in den Sprühwasserregulator eingebettet und senkrecht zu einer Querstange angeordnet sind, die in den Sprühwasserregulator eingebettet ist, derart, daß ein Flattern bzw. Verdrehen des Sprühwasserregulators während der Fahrt des Fahrzeuges verhindert ist.

9. Vorrichtung zur Sprühwassersteuerung an Fahrzeugen, nach Anspruch 5, bei der die Keilflächen assymmetrisch sind.

10. Vorrichtung zur Sprühwassersteuerung an Fahrzeugen, nach Anspruch 1, bei der die vorderen und hinteren Oberflächen der Schlitze zueinander in nicht-paralleler Ausrichtung stehen.

11. Vorrichtung zur Sprühwassersteuerung an Fahrzeugen, nach Anspruch 2, bei der der untere Teil des Trägerteils Keile enthält, die sich in Richtung zu dem vorderen Teil des Fahrzeuges erstrecken, wobei durch den Trägerteil verlaufende Schlitze zwischen den Keilen angeordnet sind, und der obere Teil des Trägerteils Keile enthält, die sich in Richtung zu dem hinteren Teil des Fahrzeuges erstrecken, wobei zwischen den Keilen Schlitze angeordnet sind, die durch den Trägerteil verlaufen, wohingegen der Mittelteil des Trägerteils keine Schlitze oder Keile enthält und der Sprühwasserregulator zwischen den Tandemradachsen des Lastzuges angebracht ist, um Sprühwasser sowohl von den vorderen als auch hinteren Rädern der Tandemradachsen zur steuern.

## Revendications

1. Elément d'un dispositif de commande des projections d'un véhicule destiné à supprimer les projections et à rassembler et à diriger les gouttelettes d'eau provenant des projections projetées à partir des pneus en rotation des véhicules du fait des forces centrifuges générées par les pneus en rotation pendant le trajet des véhicules le long des surfaces ou chaussées humides, comprenant:

a) une commande de projections (27) qui en outre comprend plusieurs coins (13) venus de matière avec une base (2) et faisant saillies à partir de celle-ci et dans laquelle les coins (13) sont espacés les uns des autres et rectilignes verticalement sur la base (2); et

b) des moyens (17) pour fixer la commande de projection sur le véhicule;

et dans lequel la base (2) de la commande de projection (27) comprend plusieurs fentes allongées (15) qui s'étendent entre les coins (13) au travers de la base en étant alignées et espacées pour permettre le passage de l'air et des gouttelettes d'eau provenant des projections consécutives à la projection entrant initialement en contact avec les coins et la base sous l'impact de la projection sur le côté récepteur de la commande de projection, caractérisé en ce que les fentes (15), ayant chacune une paroi avant (41) et une paroi arrière (42) s'étendent à travers la base sous un angle pour former une ouverture inclinée qui ainsi (42) s'étendent à travers la base sous un angle pour former une ouverture inclinée qui ainsi dévie le trajet linéaire initial des gouttelettes d'eau de la projection à travers la base après la pénétration de celles-ci dans l'ouverture de la fente (15) sur le côté récepteur de la commande de projection et après cela les fait tomber des fentes sur le côté opposé de la commande de projection.

2. Elément d'un dispositif de commande des projections d'un véhicule selon la revendication 1, caractérisé en ce que la paroi avant (41) et la paroi arrière (42) de chaque fente sont parallèles, la paroi arrière de la fente constituant un prolongement aligné d'une face inclinée du coin (13) adjacent à la fente de façon à former une surface inclinée continue telle que la formation d'un broillard à partir des gouttelettes d'eau provenant de la projection, lancées à partir des pneus en rotation du véhicule, est supprimée, les gouttelettes d'eau étant rassemblées en gouttelettes d'eau plus grosses après leur premier contact avec les faces inclinées des coins et la paroi arrière de la fente avant que les gouttelettes de projection ne passent au traverse de la base.

3. Elément d'un dispositif de commande des projections d'un véhicule selon la revendication 2, caractérisé en ce que les fentes (15) des commandes de projection divergent à travers la base (2) de manière telle qu'une moitié des fentes est inclinée vers la gauche tandis que l'autre moitié des fentes est inclinée vers la droite pour ainsi diriger respectivement le flux de la pulvérisation maintenant supprimée et rassemblée vers le côté gauche et le côté droit de la commande de projection (27) et ainsi rediriger le flux de gouttelettes d'eau au travers de la base pour qu'elles soient ensuite déversées du côté opposé de la commande de projection loin du centre de la commande de projection et loin du trajet des roues en rotation et des pneus du véhicule.

4. Elément d'un dispositif de commande des projections d'un véhicule selon la revendication 2, caractérisé en ce que les fentes sont toutes inclinées vers la gauche ou vers la droite, s'étendant selon un angle à travers la base à partir de la surface plane de façon à déverser les gouttelettes d'eau à partir du côté opposé de la commande de projection respectivement vers le côté gauche ou vers le côté droit.

5. Elément d'un dispositif de commande des projections d'un véhicule selon la revendication 3, caractérisé en ce que les commandes des projections sont situées à l'extérieur des roues et des pneus du véhicule de façon telle que les faces inclinées des coins (13) s'étendent à partir de la base (2) en étant disposées symétriquement et orientées transversalement au plan de rotation de la roue.

6. Elément d'un dispositif de commande des projections d'un véhicule selon la revendication 5, caractérisé en ce que les commandes des projections situées sur les bords latéraux (6) sont montées pivotantes par leurs côtés opposées à la base sur des bras de montage allongés (176) qui sont à leur tour montées pivotantes au-dessus des roues sur le remorque et qui, par l'intermédiaire de ressorts maintiennent les bords latéraux qui sont disposées verticalement et fixés à l'extrémité intérieure des bras de montage (176) dans une position surélevée au-dessus des roues lorsque le véhicule est arrêté, tandis que les bords latéraux sont amenés de force vers le bas et vers l'arrière dans une position de fonctionnement adjacente à la partie supérieure du pneu du véhicule par les forces d'écoulement de l'air pendant le trajet du véhicule.

7. Elément d'un dispositif de commande des projections d'un véhicule selon la revendication 6, caractérisé en ce qu'une ou plusieurs ailes pouvant tourner (180) sont fixées aux bords latéraux et maintenues par des ressorts dans une position parallèle aux bords latéraux (6) grâce à quoi pendant un trajet vers l'avant du véhicule, les ailes (180) sont amenées de force par rotation vers l'extérieur et lers l'arrière dans une position perendiculaire aux bords latéraux pour amener de force les bords latéraux vers le bas et vers l'arrière dans une position de fonctionnement.

8. Elément d'un dispositif de commande des projections d'un véhicule selon la revendication 1, caractérisé en ce que plusieurs barres verticales (46, 48) sont encastrées dans la commande des projections le long de chacun des bords extérieurs et disposées perpendiculairement à une barre transversale encastrée dans la commande des projections de manière à éviter respectivement une courbure et une torsion des commandes des projections pendant le trajet du véhicule.

9. Elément d'un dispositif de commande des projections d'un véhicule selon la revendication 5, caractérisé en ce que les faces de coin sont assymétriques.

10. Elément d'un dispositif de commande des projections d'un véhicule selon la revendication 1, caractérisé en ce que les parois avant et arrière des fentes sont dans un alignement non parallèle les unes avec les autres.

11. Elément d'un dispositif de commande des projections d'un véhicule selon la revendication 2, caractérisé en ce que la partie inférieure de la base comporte des coins qui s'étendent vers l'avant du véhicule avec des fentes situées entre les coins et s'étendant à travers la base et la partie supérieure de la base comporte des coins qui s'étendent vers l'arrière du véhicule avec des fentes situées entre les coins et s'étendant à travers la base, tandis que la partie centrale de la base ne contient ni fente, ni coin, la commande des projections étant positionnée entre les essieux tandem de la remorque pour commander la projection à la fois des pneus avant des pneus arrière des essieux tandem.

FIG. 1

FIG. 2

FIG. 3

FIG. 4

0 149 665

FIG. 5

5A     FIG. 5     5B

FIG. 6

7A     FIG. 7     7B

DROPLETS
SPRAY
WATER

2

FIG. 8

FIG. 9

FIG. 10

FIG. 11

FIG. 12

FIG. 13

FIG. 14

FIG. 15

FIG. 16

0 149 665

FIG. 17

35  34      13  27  7

FIG. 18

3

27

10

70

FIG. 19

51

49

49

27

7

27

27

IP

27

20

20

IP

FIG. 20

7  27

IP

FIG. 21

A  BI  B2  CI  C2  C3  D  E  F

FIG. 22

A  B  C  D  E  F  G  H  I  J

FIG. 23

23A

23B

5

9  27  97  9  27  7  27  21

98  96  94  93  27

45  76  74  92  27

72  IB

29  71

11  91

9  27  95  21  27  7  5

96  94  27  IC

76  92

72

29  71  91

11

4

FIG. 24

FIG. 25

FIG. 26

FIG. 27

FIG. 28

FIG. 32

COMPANY NAME/LOGO

FIG. 29

FIG. 30

FIG. 31